# EUROPÄISCHE PATENTSCHRIFT

(11) **EP 1 093 710 B1**
(45) Veröffentlichungstag und Bekanntmachung des Hinweises auf die Patenterteilung: **08.09.2004**
(21) Anmeldenummer: 00122789.1
(22) Anmeldetag: 19.10.2000
(51) Int. Cl.: A01D 57/20

(54) **Fahrzeug mit vorne angebautem Mähwerk**
Tractor with forward mounted mowing device
Tracteur à dispositif faucheur frontal

(30) Priorität: 23.10.1999 DE 19951183
(43) Veröffentlichungstag der Anmeldung: 25.04.2001
(73) Patentinhaber: DEERE & COMPANY, Moline, Illinois 61265-8098 (US)
(72) Erfinder: Franet, Roger, 57200 Sarreguemines (FR)
(74) Vertreter: Magin, Ludwig Bernhard

(56) Entgegenhaltungen:
- WO-A-93/05641
- CA-A- 1 183 355
- FR-A- 2 627 941
- GB-A- 2 186 473
- GB-A- 2 215 971
- GB-A- 191 413 068
- US-A- 4 182 098
- US-A- 5 177 944

## Beschreibung

Die Erfindung betrifft eine Kombination eines Mähwerks und eines Förderers zum Anbau an ein Fahrzeug.

Die DE-U-297 19 765 offenbart ein Fahrzeug mit drei Mähvorrichtungen, von denen eine an der Vorderseite des Fahrzeugs angebaut ist. Diese frontseitige Mähvorrichtung gibt das Mähgut mittig nach hinten auf den Boden ab. Während der Fahrt passiert das somit gebildete Schwad den Bereich zwischen den Rädern des Fahrzeugs.

Aus der FR-A-2 747 879 geht eine Kombination aus einem Mähwerk und einem Förderer zum Anschluß an ein Fahrzeug hervor, bei sich der Förderer vor einer Anhängevorrichtung befindet und folglich mit dem Mähwerk verbunden ist. Demzufolge ist der Förderer stets Bestandteil dieser Kombination.

Das der Erfindung zugrunde liegende Problem wird darin gesehen, daß es bei großen Schwaden zu Gutstaus im Freiraum zwischen den Rädern kommt und bekannte Vorrichtungen zum Ablegen des Mähguts seitlich eines Fahrzeugs eine aus dem Mähwerk und dem Förderer gebildete stets nur gemeinsam betreibbare Kombination bilden.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise gelangt das Mähgut nicht in den Freiraum zwischen den Rädern, sondern wird seitlich des einen oder anderen Rades abgelegt. Zum einen wird dadurch ein Gutstau zwischen den Rädern vermieden und zum anderen ist es möglich, dieses Schwad neben ein Schwad einer seitlich davon vorhandenen Mähvorrichtung zu legen, um ein Doppelschwad zu bilden. Der Förderer kann sowohl nebeneinander gelagerte, im gleichen Drehsinn rotierende Rollen, ein Band oder auch einen Schnecken- oder Trogförderer als Fördermittel enthalten. Der Förderer beeinträchtigt nicht die Verbindung des Mähwerks mit dem Fahrzeug und kann somit auch demontiert werden, was an der Funktion und dem Aufbau des Mähwerks nichts ändert. Diese Erfindung ermöglicht es zudem, auf handelsübliche Mähwerke zurückzugreifen.

Wenn der Förderer sowohl seitlich fördern, als auch das Gut auf den Boden gelangen lassen kann, besteht die Möglichkeit im Bedarfsfall bzw. abhängig von der Beschaffenheit des Mähguts ein Schwad mit Mähgut links, rechts oder in der Mitte zu bilden, um sich an die Aufnahmemöglichkeit eines nachfolgenden Aufnehmers anpassen zu können.

Die Ausbildung des Förderers als Bandförderer hat den Vorteil, daß er relativ flach baut und somit wenig Raum unter den beengten Verhältnissen im Bereich einer Anhängevorrichtung beansprucht. Außerdem ist ein Bandförderer leichter und beansprucht die entsprechende Achse des Fahrzeugs nicht zu sehr.

Ein Antrieb des Förderers in beide Richtungen erlaubt es, das Schwad je nach der Beschaffenheit des Feldes bzw. den Möglichkeiten eines Erntebergungsfahrzeugs, z. B. eines nachfolgenden Feldhäckslers, auf der entsprechenden Seite abzulegen. Anstatt oder zusätzlich kann mit einer veränderlichen Geschwindigkeit die Wurfweite eingestellt werden.

Wenn der Förderer auch an dem Mähwerk angebracht werden könnte, so ist die Verbindung mit dem Fahrzeug deshalb von Vorteil, weil dessen Gewicht dann nicht zusammen mit dem Gewicht des Mähwerks von der Anhängekupplung aufgenommen werden muß. Ein gemeinsamer Träger für den Förderer und die Lenker oder dergleichen der Anhängevorrichtung, insbesondere einer Drei-Punkt-Hydraulikkupplung, macht es auch leicht möglich, ein bestehendes Fahrzeug, z. B. einen selbstfahrenden Feldhäcksler, für die Aufnahme eines Mähwerks mit einem Förderer auszurüsten.

Geformte Lenker, z. B. gebogene, gekröpfte oder nicht auf einer Geraden zusammengesetzte Lenker bieten den Vorteil, daß der Förderer in einem größeren Maß schwenken kann und somit in der Außerbetriebsstellung das Mähgut besser zum Boden gelangen läßt oder es in der Betriebsstellung zuverlässiger aufnimmt.

Wenn der Förderer in den Bereich zwischen den Seitenkanten des Mähwerks und des Fahrzeugs fördert, ist sichergestellt, daß das Fahrzeug bei einem nachfolgenden Mähvorgang nicht auf einem Schwad mit gemähtem Gut fährt.

Die Verwendung einer Aufbereitungsvorrichtung führt zu einem noch schnelleren Abtrocknen des Mähguts. Die Aufbereitungsvorrichtung kann sowohl als Aufbereitungszinkenrotor, als Quetschwalzenpaar oder in sonstiger Weise mit Bürsten und dergl. ausgebildet sein.

Ein hydraulischer Antrieb hat den Vorteil einer kompakten Bauweise und flexibler Antriebsleitungen. Auf diese Weise kann in einer beengten Umgebung und in verschiedenen Stellungen der Antrieb optimal eingeleitet werden.

Die Verwendung eines selbstfahrenden Feldhäckslers als Basis für das Fahrzeug erweitert dessen Einsatzmöglichkeiten, was insbesondere dann von Vorteil ist, wenn der Feldhäcksler nicht zum Grashäckseln eingesetzt würde bzw. bei der Grasernte nicht ausreichend ausgelastet ist.

Anstatt eines einzigen Fördermittels, das sich über die gesamte Breite erstreckt, können auch zwei getrennte Fördermittel nebeneinander vorgesehen werden, die in der gleichen oder entgegengesetzten, nach außen weisenden Richtung antreibbar sind. Auf diese Weise kann das Mähgut insgesamt nach links oder rechts oder hälftig jeweils nach links und rechts abgegeben werden.

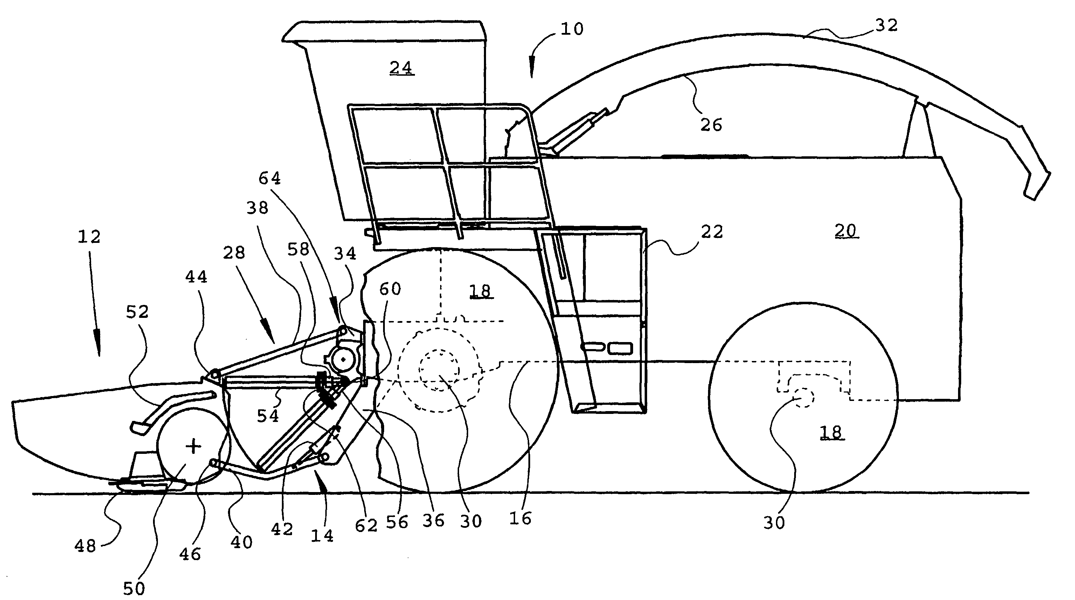

In der Zeichnung ist ein nachfolgend näher beschriebenes Ausführungsbeispiel der Erfindung dargestellt.

Die einzige Figur zeigt ein Fahrzeug 10 mit einem Mähwerk 12 und einem zwischen beiden angeordneten Förderer 14.

Das Fahrzeug 10 ist in diesem Fall im wesentlichen als ein selbstfahrender Feldhäcksler ausgebildet und enthält unter anderem einen Rahmen 16, Räder 18, ein Gehäuse 20, eine Aufstiegsleiter 22, eine Fahrerkabine 24, ein Gebläse 26 und eine Anhängevorrichtung 28.

Diese Erfindung ist nicht auf die Verbindung mit einem selbstfahrenden Feldhäcksler beschränkt, sondern kann auch an einem als Ackerschlepper, Mähdrescher oder dergleichen ausgebildeten Fahrzeug verwendet werden. Desgleichen muß der Anbau des Mähwerks 12 nicht an der Vorderseite des Fahrzeugs 10 sondern an der in Fahrtrichtung liegenden vorderen Seite erfolgen. Demnach ist auch z. B. ein Ackerschlepper mit einer Rückwärtsfahreinrichtung als Fahrzeug 10 möglich.

Der Rahmen 16 stützt sich über die Räder 18 auf dem Boden ab und trägt an seinem in Fahrtrichtung vorne gelegenen Ende die Anhängevorrichtung 28. Auf den Rahmen 16 sind alle anderen Komponenten des Fahrzeugs 10 aufgebaut.

Die Räder 18 bilden zwischen sich, einer sie aufnehmenden Achse 30 und dem Boden einen Freiraum, in den erforderlichenfalls das von dem Mähwerk 12 abgegebene Mähgut als Schwad abgelegt werden kann. Die Größe des Freiraums wird im Bereich der hinteren Achse 30 bestimmt, da diese tiefer liegt als die vordere.

Das Gehäuse 20 umschließt einen nicht gezeigten Motor, Antriebskomponenten und einen wesentlichen Teil des Gebläses 26 und schließt unten im wesentlichen mit dem Rahmen 16 ab.

Die Aufstiegsleiter 22 erstreckt sich hinter und über dem vorderen linken Rad 18 und führt zu der Fahrerkabine 24.

Die Fahrerkabine 24 befindet sich auf dem Rahmen 16 vor dem Gehäuse 20 und oberhalb der vorderen Räder 18 und schließt vorne im wesentlichen mit den vorderen Rädern 18 ab.

Das Gebläse 26 ist nur teilweise dargestellt, nämlich mit einem Auswurfkrümmer 32. Der untere und nicht sichtbare Teil des Gebläses 26 befindet sich zwischen den vorderen Rädern 18 und nimmt bei einem vollständigen Feldhäcksler das gehäckselte Erntegut von einer ebenfalls nicht dargestellten Häckselvorrichtung an.

Die Anhängevorrichtung 28 setzt sich unter anderem aus einem oberen Lager 34, einem unteren Lager 36, einem oberen Lenker 38 und zwei unteren Lenkern 40 zusammen. Die Anhängevorrichtung 28 dient dem vertikal beweglichen Anschluß des Mähwerks 12 an das Fahrzeug 10, was an sich bekannt ist. Hierzu ist zwischen dem unteren Lenker 40 und dem unteren Lager 36 jeder Seite ein linearer Hydraulikmotor 42 vorgesehen. Indem der Hydraulikmotor 42 ausgefahren wird, wird der betreffende untere Lenker 40 abgesenkt, wird er eingefahren, wird der untere Lenker 40 angehoben. Der Hydraulikmotor 42 ist so angeordnet, daß er nicht in den Bewegungsbereich des Förderers 14 gelangt. Die Anhängevorrichtung 28 befindet sich in einem Bereich, in dem bei einem Feldhäcksler normalerweise ein Häckselaggregat vorgesehen ist.

Die Anzahl der Lenker 38 und 40 kann variieren - es müssen jedoch stets insgesamt mindestens drei Lenker 38, 40 vorgesehen werden, die in der Art eines Parallelogramms angeordnet werden.

Der obere Lenker 38 verbindet vertikal schwenkbar das obere Lager 34 mit einem oberen Gelenk 44 an dem Mähwerk 12. Jeweils ein unterer Lenker 40 verbindet ein unteres Lager 36 mit einem unteren Gelenk 46 in dem unteren rückwärtigen Bereich des Mähwerks 12. Beide Lenker 38, 40 sind relativ lang ausgebildet, um genügend Freiraum für den Förderer 14 zu erreichen. Der untere Lenker 40 ist ungefähr auf halber Länge nach unten durchgebogen, um das Schwenkvermögen des Förderers 14 nach unten zu erhöhen.

Das Mähwerk 12 kann im wesentlichen in beliebiger Weise z. B. als Scheibenmähwerk, Trommelmähwerk oder Mähmessermähwerk ausgebildet werden und weist einen Mähbalken 48 mit einer Schnittbreite auf, die gewöhnlich die Breite des Fahrzeugs 10 überschreitet. Stromaufwärts des Mähbalkens 48 ist in bekannter Weise eine Mähgutaufbereitungseinheit 50 vorgesehen, die in dem Ausführungsbeispiel als ein überkopffördernder Zinkenrotor ausgebildet ist und das Mähgut nach hinten in den Bereich des Förderers 14 oder zwischen die vorderen Räder 18 abgibt. Ein oberhalb der Mähgutaufbereitungseinheit 50 vorgesehenes Leitblech 52 kann erforderlichenfalls nicht gezeigte Leitelemente aufweisen, mit deren Hilfe der Mähgutstrom zur Fahrzeugmitte hin gedrängt werden kann. Das Mähwerk 12 wird mittels der Anhängevorrichtung 28 an der Vorderseite des Fahrzeugs 10 getragen und kann mittels des Hydraulikmotors 42 in unterschiedliche Höhen gebracht werden, um unterschiedliche Schnitthöhen zu erreichen.

Der Förderer 14 ist in dem vorliegenden Ausführungsbeispiel als ein Bandförderer ausgebildet, der ein Fördermittel 54 aufweist, das um zwei Förderwalzen 56 geschlungen ist. Die Förderwalzen 56 sind miteinander in einem starren Rahmen 58 verbunden und können gemeinsam um eine quer zur Fahrtrichtung verlaufende Achse 60 an der Anhängevorrichtung 28 vertikal geschwenkt werden, wozu ein nicht gezeigtes Stellmittel vorgesehen ist, das z. B. ein Hydraulikmotor sein kann. Der Antrieb der Förderwalzen 56 erfolgt über Hydraulikmotoren 62 an dem der Anhängevorrichtung 28 zugelegenen Ende des Rahmens 58. Die Hydraulikmotoren 62 können in unterschiedlichen Richtungen und mit unterschiedlichen Geschwindigkeiten angetrieben werden, wozu nicht gezeigte von der Fahrerkabine 28 aus steuerbare Ventile vorgesehen sind. Dies ist jedoch nur eine bevorzugte Ausführungsform, die nicht unbedingt erforderlich ist. Der Rahmen 58 des Förderers 14 ist an einem die beiden Lager 34, 36 verbindenden Träger 64 angebracht, was den Vorteil hat, daß der Rückbau auf den eigentlichen Feldhäcksler sehr einfach dadurch erfolgt, daß die Anhängevorrichtung 28 mit dem Träger 64 demontiert wird.

Der Förderer 14 erstreckt sich wenigstens über die Breite der Abgabeöffnung des Mähwerks 12 und erstreckt sich ungefähr bis zur Außenkante wenigstens eines Rades 18. Die Länge ist jedenfalls so bemessen, daß der Förderer 14 das Mähgut an eine Stelle fördern kann, die seitlich eines Rades 18 liegt. Wenn eine Abgabe wahlweise auf der einen oder anderen Seite erfolgen soll, gilt diese Bemessung für beide Seiten.

Die Tiefe des Fördermittels 54, d. h. dessen Abmessung in der Fahrtrichtung, ist so gewählt, das die maximal abgegebene Mähgutmenge aufgenommen werden kann.

Aus der Zeichnung ist ersichtlich, daß der Förderer 14 eine obere, im wesentlichen waagrechte Außerbetriebsstellung und eine untere, unter einem Winkel von ca. 45 Grad verlaufende Betriebsstellung einnehmen kann. In der Außerbetriebsstellung erstreckt sich der Förderer 14 oberhalb der Abgabeöffnung und läßt das Mähgut unter sich auf den Boden gelangen. In der Betriebsstellung befindet sich das Fördermittel 54 in der Flugbahn des Mähguts, erfaßt dieses und gibt es auf der einen oder anderen Seite ab. Wenn es auch nicht dargestellt ist, so kann an der fahrzeugseitigen Seite des Förderers 14 ein Prallblech vorgesehen werden, das verhindert, daß das Mähgut auf den Rahmen 58 oder die Hydraulikmotoren 62 fällt.

Nach alledem ergibt sich folgende Funktion.

Das Fahrzeug 10 wird mittels der Anhängevorrichtung 28 mit dem Mähwerk 12 ausgestattet und auf einem Feld eingesetzt, um z. B. Gras zu mähen. Von dem Mähbalken 48 getrenntes Mähgut wird der Mähgufbereitungseinheit 50 zugeführt, die es nach hinten abgibt.

Befindet sich der Förderer 14 in seiner Außerbetriebsstellung, fällt das Mähgut auf den Boden und bildet ein Schwad in der Mitte des Fahrzeugs 10 zwischen dessen Rädern 18.

Befindet sich der Förderer 14 in seiner Betriebsstellung, gelangt das Mähgut auf das Fördermittel 54 und wird entsprechend dessen Umlaufrichtung nach links oder rechts gefördert, wo es seitlich eines der Räder 18 auf den Boden abgegeben wird.

## Patentansprüche

1. Kombination eines Mähwerks (12) und eines Förderers (14) zum Anbau an ein Fahrzeug (10), **dadurch gekennzeichnet, daß** der Förderer (14) als eine von dem Mähwerk (12) getrennte Einheit ausgebildet und in dem Bereich einer für den Anschluß des Mähwerks (12) an das Fahrzeug (10) bestimmten Anhängevorrichtung (28) anordenbar ist.

2. Kombination nach Anspruch 1, **dadurch gekennzeichnet, daß** der Förderer (14) in eine Betriebs- und eine Außerbetriebsstellung bringbar ist.

3. Kombination nach Anspruch 1 oder 2, **dadurch gekennzeichnet, daß** der Förderer (14) als Bandförderer ausgebildet ist.

4. Kombination nach einem oder mehreren der vorherigen Ansprüche, **dadurch gekennzeichnet, daß** der Förderer (14) in beiden Richtungen und/oder mit veränderlicher Geschwindigkeit antreibbar ist.

5. Kombination nach einem oder mehreren der vorherigen Ansprüche, **dadurch gekennzeichnet, daß** der Förderer (14) und eine das Fahrzeug (10) mit dem Mähwerk (12) verbindende Anhängevorrichtung (28) an einem gemeinsamen Träger (64) angreifen.

6. Kombination nach einem oder mehreren der vorherigen Ansprüche, **dadurch gekennzeichnet, daß** wenigstens einer der Lenker (40) der Anhängevorrichtung (28) derart geformt ist, daß er dem Förderer (14) zusätzlichen Freiraum für eine Bewegung in wenigstens eine der Stellungen bietet.

7. Kombination nach einem oder mehreren der vorherigen Ansprüche, **dadurch gekennzeichnet, daß** das Mähwerk (12) breiter ist als das Fahrzeug (10) und der Förderer (14) derart angetrieben oder angeordnet ist, daß er das Mähgut in dem Bereich zwischen einer Seitenkante des Mähwerks (12) und einer zugelegenen Seitenkante des Fahrzeugs (10) ablegt.

8. Kombination nach einem oder mehreren der vorherigen Ansprüche, **dadurch gekennzeichnet, daß** das Mähwerk (12) zwischen einem Mähbalken (48) und dem Förderer (14) eine Mähgutaufbereitungseinheit (50) aufweist.

9. Kombination nach einem oder mehreren der vorherigen Ansprüche, **dadurch gekennzeichnet, daß** der Förderer (14) hydraulisch antreibbar ist.

10. Kombination nach einem oder mehreren der vorherigen Ansprüche, **dadurch gekennzeichnet, daß** es im übrigen als selbstfahrender Feldhäcksler ausgebildet ist.

11. Kombination nach einem oder mehreren der vorherigen Ansprüche, **dadurch gekennzeichnet, daß** der Förderer (14) aus einer linken und einer rechten Einheit besteht, die im gleichen oder entgegengesetzten Sinn antreibbar sind.

## Claims

1. A combination of a mower mechanism (12) and a conveyor (14) for mounting on a vehicle (10), **characterized in that** the conveyor (14) is in the form of a unit separate from the mower mechanism (12) and can be arranged in the region of a hitch device (28) provided for attachment of the mower mechanism (12) to the vehicle (10).

2. A combination according to claim 1, **characterized in that** the conveyor (14) can be brought into an operating and an out of operation position.

3. A combination according to claim 1 or 2, **characterized in that** the conveyor (14) is in the form of a belt conveyor.

4. A combination according to one or more of the preceding claims, **characterized in that** the conveyor (14) can be driven in both directions and/or with variable speed.

5. A combination according to one or more of the preceding claims, **characterized in that** the conveyor (14) and a hitch device (28) connecting the vehicle (10) to the mower mechanism (12) engage on a common support (64).

6. A combination according to one or more of the preceding claims, **characterized in that** at least one of the links (40) of the hitch device (28) is so formed that it provides the conveyor (14) with additional free space for movement into at least one of the positions.

7. A combination according to one or more of the preceding claims, **characterized in that** the mower mechanism (12) is wider than the vehicle (10) and the conveyor (14) is so driven or arranged that it deposits the mowed crop in the region between a side edge of the mower mechanism (12) and a corresponding side edge of the vehicle (10).

8. A combination according to one or more of the preceding claims, **characterized in that** the mower mechanism (12) comprises a mowed crop processing unit (50) between a cutter bar (48) and the conveyor (14).

9. A combination according to one or more of the preceding claims, **characterized in that** the conveyor (14) can be driven hydraulically.

10. A combination according to one or more of the preceding claims, **characterized in that** it is otherwise built as a self-propelled forage harvester.

11. A combination according to one or more of the preceding claims, **characterized in that** the conveyor (14) consists of left and right units which can be driven in the same or opposite senses.

## Revendications

1. Combinaison d'une faucheuse (12) et d'un convoyeur (14) destinée à être montée sur un véhicule (10), **caractérisée en ce que** le convoyeur (14) constitue une unité séparée de la faucheuse (12) et peut être disposée dans la région d'un dispositif d'accrochage (28) pour la liaison de la faucheuse (12) au véhicule (10).

2. Combinaison selon la revendication 1, **caractérisée en ce que** le convoyeur (14) peut être amené dans une position active et une position inactive.

3. Combinaison selon l'une des revendications 1 ou 2, **caractérisée en ce que** le convoyeur (14) est constitué par un convoyeur à bandes.

4. Combinaison selon une ou plusieurs des revendications précédentes, **caractérisée en ce que** le convoyeur (14) peut être entraîné dans les deux directions et/ou avec des vitesses variables.

5. Combinaison selon une ou plusieurs des revendications précédentes, **caractérisée en ce que** le convoyeur (14) et le dispositif d'accrochage (28) reliant le véhicule (10) à la faucheuse (12) sont accrochés à un support commun (64).

6. Combinaison selon une ou plusieurs des revendications précédentes, **caractérisée en ce qu'**au moins une des bielle (40) du dispositif d'accrochage (28) est conformée de manière telle qu'elle offre au convoyeur (14) un espace libre additionnel pour un déplacement dans au moins une des positions.

7. Combinaison selon une ou plusieurs des revendications précédentes, **caractérisée en ce que** la faucheuse (12) est plus large que le véhicule (10) et le convoyeur (14) est entraîné ou disposé de manière telle qu'il dispose la récolte fauchée dans la région située entre une arête latérale de la faucheuse (12) et une arête latérale complémentaire du véhicule (10).

8. Combinaison selon une ou plusieurs des revendications précédentes, **caractérisée en ce que** la faucheuse (12) présente en une traverse de fauche (48) et le convoyeur (14) une unité (50) de conditionnement de la récolte fauchée.

9. Combinaison selon une ou plusieurs des revendications précédentes, **caractérisée en ce que** le convoyeur (14) est à entraînement hydraulique.

10. Combinaison selon une ou plusieurs des revendications précédentes, **caractérisée en ce que** la combinaison est constituée par ailleurs en tant que ensileuse automotrice.

11. Combinaison selon une ou plusieurs des revendications précédentes, **caractérisée en ce que** le convoyeur (14) se compose d'une unité gauche et d'une unité droite qui peuvent être entraînées dans le même sens ou en sens contraire.
